(19) **Europäisches Patentamt / European Patent Office / Office européen des brevets**

(11) **EP 3 577 709 B1**

(12) **EUROPEAN PATENT SPECIFICATION**

(45) Date of publication and mention of the grant of the patent:
**21.10.2020 Bulletin 2020/43**

(21) Application number: **18703941.7**

(22) Date of filing: **31.01.2018**

(51) Int Cl.:
*H01M 8/04828* (2016.01)   *H01M 8/0612* (2016.01)
*H01M 8/0637* (2016.01)   *H01M 8/0662* (2016.01)
*H01M 8/04746* (2016.01)   *H01M 8/04007* (2016.01)
*H01M 8/04701* (2016.01)   *H01M 8/124* (2016.01)
*C01B 3/48* (2006.01)   *C01B 3/50* (2006.01)
*C01B 3/38* (2006.01)

(86) International application number:
**PCT/EP2018/052453**

(87) International publication number:
**WO 2018/141822 (09.08.2018 Gazette 2018/32)**

(54) **METHOD AND SYSTEM FOR PRODUCING HYDROGEN, ELECTRICITY AND CO-PRODUCTION**

SYSTEM UND VERFAHREN ZUR PRODUKTION VON WASSERSTOFF UND ELEKTRIZITÄT

SYSTÈME ET PROCÉDÉ DE PRODUCTION D'HYDROGÈNE ET D'ÉLECTRICITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2017 EP 17154005**

(43) Date of publication of application:
**11.12.2019 Bulletin 2019/50**

(73) Proprietor: **SOLIDpower SA**
**1400 Yverdon-les-Bains (CH)**

(72) Inventors:
• **DIETHELM, Stefan**
**1680 Romont (CH)**
• **BUCHELI, Olivier**
**6043 Adligenswil (CH)**

(74) Representative: **Dr. Graf & Partner AG**
**Intellectual Property**
**Herrenacker 15**
**Postfach 518**
**8201 Schaffhausen (CH)**

(56) References cited:
WO-A1-2016/087389   US-A1- 2004 202 914
US-A1- 2005 112 425   US-A1- 2015 093 664

**Description**

**Field of the Invention**

The field of invention relates to a method and a system for producing hydrogen and electricity from a reformed process gas feed using a solid oxide fuel cell unit.

**Background of the Invention**

A combined hydrogen and electricity supply system using a solid oxide fuel cell unit allows simultaneous production of electrical power, hydrogen and heat. Such a system is also referred to as polygeneration or combined hydrogen, heat and power system, often abbreviated as CH2P system. Such a CH2P system is particularly interesting if the production of hydrogen, heat and electrical power can be modulated, i.e. the ratio between electrical power and hydrogen can be adjusted according to specific needs, for instance of a $H_2$ fuelling station.

Document WO2005/041325A2 discloses a CH2P-system that utilizes a fuel cell for producing hydrogen, electrical power, or a combination of both hydrogen and electrical power. In a first mode, the fuel cell performs an electrochemical reaction by reacting a hydrogen-containing fuel with oxygen to produce electricity, water and heat. In a second mode, the fuel cell utilizes heat released by the electrochemical reaction of the fuel cell to reform a carbonaceous fuel to produce a hydrogen rich gas. In a third mode, both hydrogen and electricity are co-produced by the fuel cell. The CH2P-system can control the amount of hydrogen and/or electrical power produced and can switch between modes by varying an external electrical load and/or by acting on fuel feed flow through a mass flow regulator. Document WO2005/041325A2 discloses a SOFC system with internal reforming only, which is made possible by the presence of Nickel (Ni) in a state of the art SOFC. One disadvantage of the CH2P-system disclosed is that the modulation between hydrogen and electrical power production is strongly limited. Furthermore, the option of operating the SOFC stack close to short-circuit is not viable and will lead to strong degradation of the SOFC electrodes.

Document US8071241B2 discloses a CH2P-system comprising a SOFC system coupled with a fuel processing and a H2 separation unit to produce hydrogen and electrical power. This CH2P-system does not allow modulation between hydrogen and electrical power.

**Technical Problem to be solved**

The objective of the present invention is thus to improve the modulation between hydrogen and electrical power production in a combined hydrogen and electricity supply system. A further objective of the present invention is to expand the use of a combined hydrogen and electricity supply system.

**Summary of the Invention**

The above-identified objectives are solved by a method comprising the features of claim 1 and more particular by a method comprising the features of claims 2 to 14. The above-identified objectives are further solved by a combined hydrogen and electricity supply system comprising the features of claim 15 and more particular by a system comprising the features of claims 16 to 19.

The objective is in particular solved by a method for producing hydrogen and electrical power in a combined hydrogen and electricity supply system, the method comprising the steps of:

-  introducing a carbonaceous fuel and steam into a pre-reformer, and in the pre-reformer reforming part of the carbonaceous fuel by steam reforming into a first reformate gas comprising hydrogen and carbon monoxide so that unconverted carbonaceous fuel remains;
-  introducing the unconverted carbonaceous fuel and the first reformate gas into an anode side of a solid oxide fuel cell stack;
-  in the solid oxide fuel cell stack reforming at least part of the unconverted carbonaceous fuel and preferably all of the unconverted carbonaceous fuel by steam reforming into a second reformate gas comprising mainly hydrogen and carbon monoxide,
-  introducing air or oxygen containing gas into a cathode side of the solid oxide fuel cell stack,
-  in the solid oxide fuel cell stack converting oxygen as well as hydrogen and carbon monoxide of the first and second reformate gas into electrical power and an anode off-gas;
-  introducing the anode off-gas into a $H_2$ separation unit,
-  converting in the $H_2$ separation unit the anode off-gas into purified hydrogen and an off-gas, and
-  modulating the amount of purified hydrogen and electrical power produced by a combined control of a reforming rate of the pre-reformer, and a fuel utilization rate of the solid oxide fuel cell stack, so that the ratio between purified hydrogen and electrical power can be adjusted.

The objective is further in particular solved by a combined hydrogen and electricity supply system for producing hydrogen, electrical power and co-production, the system comprising:

- a variable electrical load for varying the current in the SOFC and the electrical power produced,
- a pre-reformer connected to a stream of carbonaceous fuel, a stream of steam and connected to a heating source, wherein said pre-reformer produces a first reformate gas comprising at least hydrogen, carbon monoxide and unconverted carbonaceous fuel, wherein the pre-reformer is responsive to the amount of heat provided by the heating source,
- a solid oxide fuel cell stack coupled to the variable electrical load and coupled to the first reformate gas;
- wherein the ratio between electrical power and amount of hydrogen produced depends at least on the variable electrical load and the heat provided by the heating source..

The objective is further in particular solved by a combined hydrogen and electricity supply system for producing hydrogen, electrical power and co-production, the system comprising a solid oxide fuel cell stack, a pre-reformer, an electrical load consuming the electrical Power, a hydrogen separation unit, a control unit, a carbonaceous fuel source, and a steam source, the pre-reformer being connected to a stream of the carbonaceous fuel source and a stream of the steam source, wherein said pre-reformer produces a first reformate gas comprising at least hydrogen, carbon monoxide and unconverted carbonaceous fuel, the solid oxide fuel cell stack being coupled to the electrical load, being coupled to the pre-reformer to receive the first reformate gas and the unconverted carbonaceous fuel and being coupled to the hydrogen separation unit, wherein the pre-reformer is located outside of the solid oxide fuel cell stack to perform external reforming, wherein the electrical load is a controllable, variable electrical load, wherein the pre-reformer is thermally coupled to a controllable heating source, and wherein the control unit is adapted to at least control the variable electrical load and the heat provided by the heating source to thereby control the ratio between electrical power and amount of hydrogen being produced.

The present invention provides a hydrogen and electricity co-production system that is efficient, cost-effective and flexible.

The method and the combined hydrogen and electricity supply system according to the invention produces electrical power and hydrogen from a carbonaceous fuel. It includes a fuel processor respectively a pre-reformer that partially converts the carbonaceous fuel into hydrogen and carbon monoxide before feeding the SOFC stack. When referring to a SOFC stack herein, such a SOFC stack may consist of one SOFC stack or of multiple SOFC stacks. The converted carbonaceous fuel is also referred to as reformate or reformate gas. The method and system according to the invention uses an endothermic reaction in the pre-reformer. Therefore the steam and carbonaceous fuel entering the pre-reformer does not comprise added air or oxygen. The preferred fuel processing technique is steam reforming, since, being an endothermic reaction, waste heat can be valorised in the reforming reaction, thereby increasing the efficiency of the whole process. In the method and system according to the invention, part of the reforming of the fuel takes place in the pre-reformer by external reforming, and part of the reforming of the fuel takes place directly in the SOFC stack by internal reforming, taking advantage from the heat produced within the SOFC stack during the electrochemical conversion of reformate gas into electrical power. Thus the electrical power production in the SOFC stack provides heat for the internal steam reforming reaction. The preferred fuel processing technique for the external reforming as well as the internal reforming is steam reforming.

The terms "internal reforming" and "external reforming" in this context have the following meaning: As used herein, the term "internal reforming" refers to fuel reforming occurring within the body of a SOFC cell, a SOFC stack, or otherwise within a fuel cell assembly. External reforming, which is often used in conjunction with a fuel cell, occurs in a separate piece of equipment that is located outside of the SOFC stack. In other words, the body of the external reformer, in the previous paragraph referred to as "pre-reformer", is not in direct physical contact with the body of a SOFC or SOFC stack. This thermal separation of pre-reformer and SOFC stack allows independent thermal control of the pre-reformer and the SOFC stack, which is essential to allow control of the generation of electrical power and hydrogen in a wide range. The method and system according to the invention therefore allows modulating the production of hydrogen and electrical power in a wide range, i.e. the ratio between purified hydrogen and electrical power can be adjusted according to the needs. Thus, remaining unconverted hydrogen leaves the SOFC stack and can be recovered because the SOFC stack is coupled with a hydrogen separation system. State of the art SOFC systems that modulate between electrical power and hydrogen production only use internal reforming within the SOFC stack. The method and system according to the invention has the advantage that external reforming in a pre-reformer as well as internal reforming in the SOFC stack is used to reform the carbonaceous fuel. One disadvantage of the method disclosed in the state of the art is that the control between electrical power and hydrogen production strongly restrains the range of operating points because of system heat balance requirements. State of the art SOFC stacks contain Ni in the anode side of the SOFC stack, which means the fuel electrode, which is a good catalyst for the steam reforming reaction, also favours methane cracking. Steam should therefore simultaneously be fed with the carbonaceous fuel. Internal reforming, i.e. the conversion of carbonaceous fuel and steam inside the fuel electrode, is thereby used in state of the art SOFCs. This endothermic reaction tends to cool down the SOFC stack if not sufficient heat is locally generated to compensate for the heat demand. It is therefore necessary in state of the art SOFCs that a minimal electrical power to hydrogen ratio has to be fulfilled to provide sufficient local heat balance, e.g. >68% fuel conversion rate in case of internal steam reforming. The method and system according to the invention has therefore the advantage that the fuel conversion in the SOFC can be lower, thereby the ratio between electrical power and hydrogen can be lower. In one exemplary method, most or all of the fuel is processed in the pre-reformer by external reforming, using steam reforming, so that minimal or no unconverted carbonaceous fuel is fed to the SOFC stack, so that there is minimal or no internal reforming in the SOFC stack. This may be achieved, for example, by using electricity to heat the pre-reformer. The method and system according to the invention expands control options and therefore adds one degree of freedom by tuning fuel flow rate, fuel utilization and heat supply to pre-reformer to manage the thermal sustainability of the system in all conditions in the modulation range of hydrogen and electrical power generation.

In an advantageous method, external heat, most preferably electrical heat, for example by using an electrical heating element such as a resistor , is provided to the SOFC stack, so that sufficient heat is locally available in the SOFC stack, even though little or no electrical power is produced in the SOFC stack, thus allowing all electrical heat to be used for internal reforming, which results in a high yield of hydrogen.

The method and system according to the invention proposes an alternative way of performing the heat management for the modulation between hydrogen and electrical power production, in particular by separately control external reforming and internal reforming. One aspect of the invention is to consider the pre-reformer and the SOFC cell as forming together the complete steam reforming unit. The steam reforming in the pre-reformer and the SOFC cell may be controlled independently. The heat required to complete the carbonaceous fuel steam reforming reaction is thereby provided from outside to the pre-reformer, in order to convert part of the carbonaceous fuel to synthesis gas, and is partially provided by the SOFC stack either through internal heat generated by electrical losses or through external heat, preferably through heat produced using external electrical energy, and most preferably heat produced using external excess electrical energy. In the electrical power production mode of the SOFC stack, a lot of heat is generated in the SOFC stack. The heat balance is managed by allowing internal reforming of up to 90% to take place in the SOFC stack. This is achieved by providing little heat to the pre-reformer, or in other words keeping the pre-reformer outlet temperature below 450°C. If required, excess heat can also be removed from the SOFC stack by increasing the air flow to the cathode side of the SOFC stack. On the other hand, in hydrogen production mode, electrical power production remains low, i.e. sufficient to cover the system power requirements, thereby little heat is generated in the SOFC. Therefore, most of the heat required for the carbonaceous fuel steam reforming will be provided to the pre-reformer, which will operate at a higher temperature of up to 700°C. The pre-reformer is preferably operated at variable temperature, and the temperature is controlled such that the prereforming rate of the pre-reformer is fixed by its outlet temperature, preferably a given outlet temperature. In further advantageous embodiments, the prereforming rate may also be controlled by other means, for example by bypassing the pre-reformer with part of the carbonaceous fuel and steam.

In an advantageous embodiment heat required by the pre-reformer is provided by burning off-gas exiting the $H_2$ separation unit, which is composed of the remaining $H_2$, CO and $CO_2$. The caloric value of the off-gas can either be controlled by varying the degree of $H_2$ separation in the $H_2$ separation unit or by feeding additional carbonaceous fuel to the burner as a make-up gas.

One advantage of the method and system according to the invention is that the operation strategy enables to cover the full range of hydrogen and electrical power production, i.e. hydrogen production only to electrical power production only, in the most efficient way.

In a further advantageous embodiment at least one of the steam generator and the pre-reformer may be electrically heated, thus allowing producing hydrogen by dissipating excess electrical power, in particular electrical power from the grid.

During operation of the SOFC cell the electrochemical reaction generates electrical voltage across the electrodes and electrical current flow from the oxidizer electrode to the fuel electrode through an external electrical load. It also produces heat according to electrochemical laws.

When the SOFC stack performs fuel-to-electricity conversion the SOFC operating parameters can be adjusted to achieve high electrical efficiency, e.g. by increasing the fuel utilisation.

The pre-reformer used in the embodiment according to the invention reforms hydrocarbon fuel into hydrogen-rich reformate. Preferably a steam methane reformer is used to produce hydrogen. For steam reforming, hydrogen-rich gas is produced according to the following endothermic reaction:

$$CH_4 + H_2O <\rightarrow CO + 3\ H_2$$

ΔH = -206.16 kJ/mol CH$_4$

Consequently, heat needs to be provided to drive the reaction. The heat is provided indirectly by heat transfer, preferably through a heat exchanger. The heat provided indirectly by heat transfer may be provided by the combustion of a fraction of the incoming natural gas feedstock or by burning waste gases, such as purge gas from a hydrogen purification system, or by using electrical power.

The expression "a reformed process gas feed" herein refers to the output of a conversion of a fuel, for example hydrocarbon or alcohol, into another fuel usually with a higher heating value using a reforming reaction, preferentially steam reforming.

Steam reforming is a method for producing hydrogen or other useful products from carbonaceous fuels such as hydrocarbon fuels, for example natural gas. This is achieved in a processing device called a reformer which reacts steam at high temperature with the fuel so that a reformed process gas feed is produced.

The reforming of any hydrocarbon is as follows:

$$C_nH_{2n+2} + n\ H_2O \rightarrow n\ CO + (2n+1)H_2$$

Such a steam reforming can be performed for a wide range of fuels, but the process itself is similar in all cases.

The present invention provides for a hydrogen and electricity co-production system for producing hydrogen, electricity, or a combination of both hydrogen and electricity. Specifically, the invention provides for using a SOFC system comprising a SOFC stack, to perform multiple functions, such as reforming fuel to produce hydrogen, consuming reactants to produce electricity, and performing a combination of both, depending upon the condition of an electrical load, such as a variable electrical load, that is attached to the SOFC stack.

In a typical electricity-generating mode, the SOCF stack performs an electrochemical reaction by reacting a hydrogen-containing fuel with oxygen to produce electricity, water and heat. In an alternative or reformer mode, the SOFC stack can be adapted to utilize heat, preferably released by an electrochemical reaction of the SOFC stack to reform a hydrocarbon fuel to produce hydrogen. Furthermore, in a co-production mode, both hydrogen and electricity are co-produced by the fuel cell. The system according to the invention can control an amount of hydrogen and/or electricity produced and can switch between modes by in particular varying, adjusting or controlling an electric load on the system.

According to the teachings of the present invention, a co-production energy supply system capable of producing hydrogen and electricity is contemplated. The system includes a heat controlled pre-reformer and a variable electric load for varying the amount of impedance on the system, and an SOFC stack coupled to the variable electric load. During use, the pre-reformer produces hydrogen and the SOFC stack produces hydrogen, electricity or both responsive to the amount of heat provided to the pre-reformer and the amount of impedance introduced to the system by the variable load. According to still another aspect, the impedance of the variable electric load can be varied to vary the relative amount of or the ratio of electricity and hydrogen generated by the SOFC stack.

According to another aspect, the system can include structure or means for varying the impedance of the variable load so as to control the relative amount of hydrogen and electricity produced by the SOFC stack. The means for varying can include a controller coupled to the variable load. The controller varies the amount of impedance of the variable load to control the relative amount of hydrogen and electricity produced by the SOCF stack. In addition the controller controls the pre-reforming rate of the pre-reformer by controlling heat provided to the pre-reformer or by controlling the exit temperature of the pre-reformer. Optionally, the controller can operate one or more fluid regulating devices for regulating the flow of one or more input reactants to the pre-reformer and the SOFC stack to control the overall amount of hydrogen and/or electricity produced thereby.

The present invention also contemplates a method of co-producing hydrogen and electricity, that comprises the steps of providing a variable load for varying the amount of impedance on a system, providing a pre-reformer capable of producing a reformate gas, providing an SOFC stack capable of producing both hydrogen and electricity, and varying the impedance of the variable load to vary the relative amount of hydrogen and electricity generated by the SOFC stack.

According to one aspect, the method can include the additional step of configuring the variable load to be able to introduce, in a reformer operational mode, at least a minimum impedance amount, where the SOFC stack is adapted to reform any unspent input fuel reactant into hydrogen when the variable load is set to the minimum impedance amount. The minimum impedance amount can be about zero, and which corresponds to a short circuit electrical arrangement.

According to another aspect, the variable load can be configured to be set to a maximum impedance amount which corresponds to an open circuit electrical arrangement across the SOFC stack.

According to still another aspect, the method includes the step of configuring the variable load to be able to introduce, in a co-production operational mode, an impedance amount that is between the maximum impedance amount and the minimum impedance amount so that the pre-reformer produces a reformate gas, and the SOFC stack produces both hydrogen and electricity, where the amounts of the hydrogen and electricity produced by the SOFC stack correspond to the amount of impedance of the variable load.

In an advantageous embodiment electricity is used to heat at least some parts and preferably all parts of the system according to the invention that need heat for the reaction to provide hydrogen and electricity. It is advantageous to electrically heating at least one of the pre-reformer, the steam generator, the SOFC stack, and fluid flowing such as carbonaceous feed or oxidant flow. Most advantageously, such a system and method allows producing hydrogen out of electricity. Most advantageously $CO_2$-free electricity such as solar energy or wind energy is used to feed the system according to the invention with electrical power. This allows producing hydrogen with a low carbon footprint. Most advantageously surplus $CO_2$-free electricity is used in the system, when there is an excess of electrical power in the grid. Such surplus of electrical power may arise on a very sunny day during summer, or on a very windy day when electricity is produced by wind energy. The system according to the invention allows using such surplus energy to produce hydrogen. Hydrogen can therefore be produced very cheap, in fact, it is even possible to offering the service for using excess electrical energy from the grid. In addition, hydrogen can be stored, for a short period of time as well as for a long period of time. The system according to the invention allows producing hydrogen, electricity and co-production. Therefore the hydrogen produced and thereafter stored may later on be used to produce electricity, and most preferably to feed electrical power back into the electric grid. In a preferred embodiment, the system according to the invention may be used to stabilize the electric grid, in that electricity from the grid is used during surplus of electricity, and in the electricity is fed to the grid during lack of electrical power.

Various objects, features, aspects and advantages of the present invention will become more apparent from the following detailed description of preferred embodiments of the invention, along with the accompanying drawings in which like numerals represent like components.

**Brief Description of the Drawings**

Fig. 1     shows a schematic representation of a combined hydrogen and electricity supply system of a first embodiment of the invention;

Fig. 2     shows a combined hydrogen and electricity supply system of a second embodiment of the invention comprising a control unit and a heat exchanger network for the heat management in the system;

Fig. 3     shows a control strategy of the combined hydrogen and electricity supply system according to Fig. 2;

Fig. 4     shows a relation between the H2/(H2+P) ratio, pre-reforming rate and Fuel Utilisation (FU) of the combined hydrogen and electricity supply system according to Fig. 2 to fulfil heat balance;

Fig. 5     shows a thermodynamic equilibrium calculation of natural gas (CH4) steam reforming as a function of temperature;

Fig. 6     shows a further example of a relation between pre-reforming rate and fuel utilization in a combined hydrogen and electricity supply system to fulfil heat balance;

Fig.     7shows the relation according to figure 6 and in addition the effect of varying the amount of fuel;

Fig. 8     shows a further embodiment of a combined hydrogen and electricity supply system;

Fig. 9     shows a further embodiment of a combined hydrogen and electricity supply system;

Fig. 10    shows an option for controlling the degree of pre-reforming;

Fig. 11    shows a second option for controlling the degree of prereforming.

**Description of preferred Embodiments**

The present invention provides hydrogen, electricity and co-production system. The invention will be described below relative to illustrative embodiments. Those skilled in the art will appreciate that the present invention may be implemented in a number of different applications and embodiments and is not specifically limited in its application to the particular embodiment depicted herein.

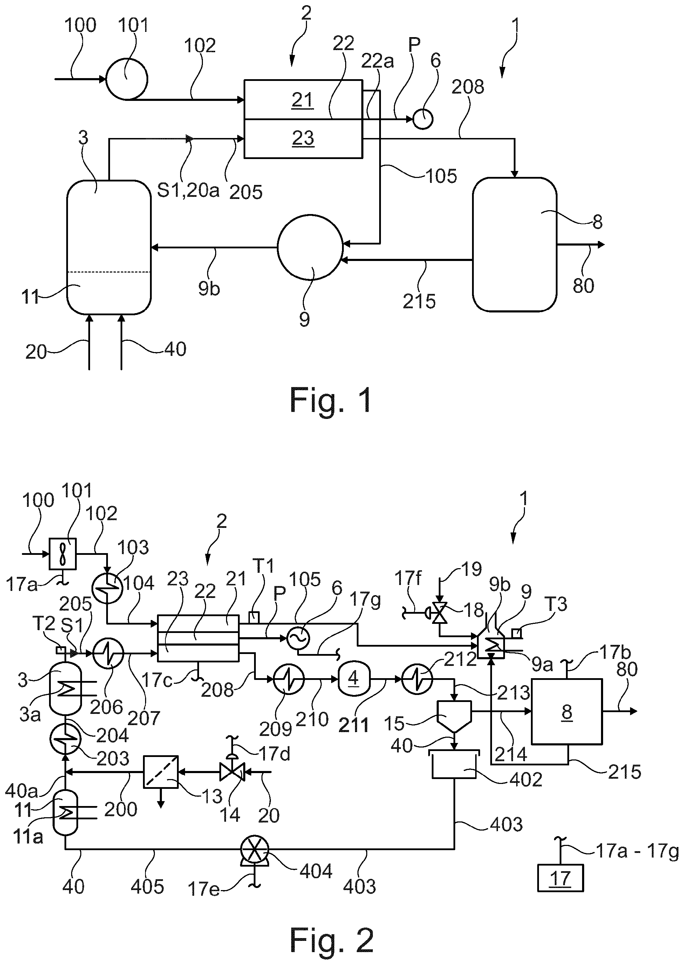

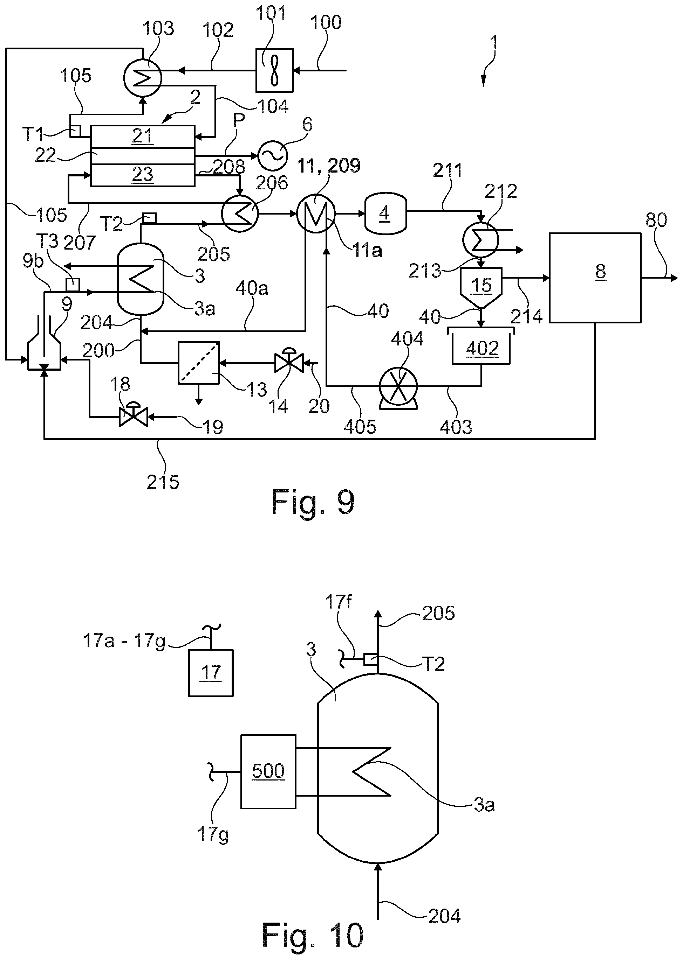

Figure 1 shows a schematic embodiment of a combined hydrogen and electricity supply system 1 suitable for producing as the output hydrogen 80, electrical power P or a combination of both hydrogen 80 and electrical power P. The system 1 comprises a blower 101, a solid oxide fuel cell stack 2, a pre-reformer 3, an electrical load 6, a hydrogen separation unit 8 and a burner 9. The pre-reformer 3 is separated from the SOFC stack 2, and is not in direct physical contact with the body of the SOFC stack 2, so that there is no direct heat transfer between the pre-reformer 3 and the SOFC stack 2 through physical contact, thus allowing independent thermal control of the pre-reformer 3 and the SOFC stack 2. The solid oxide fuel cell stack 2 comprises a cathode side 21, an electrolyte 22 and an anode side 23. The solid oxide fuel cell stack 2 is coupled to a variable electrical load 6 that consumes electrical power P. The solid oxide fuel cell stack 2 is adapted to receive input reactants, such as a carbonaceous fuel 20, most preferably natural gas, and an oxidant 100, most preferably air. The air 100 is fed to the blower 101 and through conduit 102 to the cathode side 21 of the solid oxide fuel cell stack 2. The fuel 20 and water 40 is fed to a steam generator 11 and then to the pre-reformer 3 to produce by external reforming a first reformate gas S1 comprising hydrogen and carbon monoxide so that unconverted carbonaceous fuel 20a remains. The first reformate gas S1, unconverted carbonaceous fuel 20a and steam is fed by conduit 205 to the anode side 23 of the solid oxide fuel cell 2. In the solid oxide fuel cell stack 2 at least part of the unconverted carbonaceous fuel 20a and steam is reformed by internal reforming into a second reformate gas S2 comprising mainly hydrogen and carbon monoxide. In an exceptional method step, the whole carbonaceous fuel 20 may be converted in the pre-reformer 3 by external reforming, thus no unconverted carbonaceous fuel 20a remains that could be fed from the pre-reformer 3 to the solid oxide fuel cell stack 2. Such an external reforming may be achieved by providing the pre-reformer 3 with sufficient heat, for example by electrically heating the pre-reformer 3, preferably using surplus electricity, such as electricity produced by wind energy or solar energy.
An oxygen depleted air stream 105 is fed from the cathode side 21 to the burner 9. An anode off gas 208 is fed from the anode side 23 to the hydrogen separation unit 8. The hydrogen separation unit 8 is adapted to separate at least a portion of hydrogen from the anode off gas 208 and is adapted to generate purified hydrogen 80 and an off gas 215 that is fed to the burner 9 where it is burnt. In an advantageous embodiment, disclosed in figure 2, also a make-up gas 19 may be introduced to the burner 9. The make-up gas 19 may be controlled by controller 17 through command line 17f and valve 18. In a preferred embodiment heat 9b, generated in the burner 9 by burning off gas 215 and/or make-up gas 19, is transferred to the pre-reformer 3, for example through heat exchangers 9a and 3a, which may be connected, as disclosed in figure 2, or for example through heat exchanger 3a only, as disclosed in figure 9. In a preferred embodiment the heat, for example the heat generated in the burner 9 or the heat T3 measured at the exit of heat exchanger 9a, may be controlled by controlling at least one of the off gas 215 and the make-up gas 19. The heat of the off gas 215 and/or the make-up gas 19 provided to the pre-reformer 3 may be controlled by controller 17 to provide heat management and to control the pre-reforming rate in the pre-reformer 3.

Suitable techniques for the hydrogen separation unit 8 may be adsorbtion based, for example pressure-swing adsorption, or membrane base, for example palladium-based, or protonic, or electrochemical base, for example electrochemical pumps based on protonic conductors.

Figure 1 also shows a schematic representation of the process. Water 40 enters the evaporator 11, also referred to as steam generator. Steam is generated in the evaporator 11 and mixed to the carbonaceous fuel 40, most preferably natural gas NG, before entering the pre-reformer 3. In the pre-reformer 3, natural gas NG is partially reformed to hydrogen $H_2$ and carbon monoxide CO, the remaining being methane, steam and carbon dioxide $CO_2$. The pre-reforming rate is determined by the outlet temperature T2 of the prereformed gas leaving the pre-reformer 3. Preferably the outlet temperature is kept as a fixed value. The prereformed gas enters the anode side 23 of the SOFC stack 2 where the remaining methane is reformed. In a preferred method, the resulting syngas is in the SOFC stack 2 partially converted to water $H_2O$ and $CO_2$ through electrical power P production in the SOFC stack 2. The anode off-gas 208 contains $H_2$, CO, $CO_2$ and $H_2O$. The anode off-gas 208 is fed to the hydrogen separation unit 8, where at least part of the $H_2$ of the anode off-gas 208 is separated to produce a hydrogen stream 80. The off-gas 215 or tail-gas 215 of the hydrogen separation unit 8 is then burnt in burner 9 with the hot depleted air 105 exiting the cathode side 21 of the SOFC stack 2. The heat 9b generated by the burner 9 is most advantageously used for the steam generation and pre-reforming reaction.

The input fuel reactant 20 can be any suitable hydrocarbon fuel known to those of ordinary skill in the art. The input oxidant reactant 100 can comprise any suitable oxygen-containing fluid.

The system 1 can be operated in a number of select modes to produce and modulate electrical power P, purified hydrogen 80 and a combination thereof. The main purpose of the method and system according to the invention is the production of electrical power P, hydrogen in the form of purified hydrogen 80 and a combination thereof from a carbonaceous fuel feed. The present description distinguishes between hydrogen produced within the system, and the output of the system, which are electrical power P and/or hydrogen in the form of purified hydrogen 80.

The illustrated system 1 is a multi-function system. In addition to the traditional function of electrical generation, the SOFC stack 2 can be utilized to perform reforming for hydrogen production or the co-production of hydrogen and electricity. In a traditional mode of operation, the SOFC stack 2 generates electricity by electrochemically reacting the input fuel reactant with the input oxidant reactant to generate power, waste heat and exhaust, which includes carbon dioxide and water. In an alternative mode of reformer operation, the SOFC stack 2 reforms the input fuel reactant to generate a hydrogen exhaust without simultaneously generating electricity. Additionally reactant byproducts that can be included in the exhaust include carbon monoxide, carbon dioxide, and water. In a combined or co-production mode of operation, the SOFC stack 2 simultaneously generates both a hydrogen exhaust and electricity. The exhaust can include additional reaction species such as carbon monoxide, carbon dioxide and water respectively steam.

As used herein, the term "reforming" and the like refers to a chemical process performed by the pre-reformer 3 or the SOFC stack 2 that reacts hydrocarbon fuels, at an elevated temperature, such as above 250°C, and preferably between about 400°C and about 1000°C, in the presence of steam and without oxygen to generate a reformate. In the present invention, the pre-reformer 3 and the SOFC stack 2 reforms hydrocarbon fuels to produce hydrogen by reacting the hydrocarbon fuel with water.

The combined hydrogen and electricity supply system 1 disclosed in figure 1, allows, based on an input feed of carbonaceous fuel 200, producing as output hydrogen in the form of purified hydrogen 80 and electrical power P. The system 1 can switch among the different operational modes to generate as output either electricity, which means electrical power P, or hydrogen or vary the ratio of hydrogen to electricity produced in the combined mode, by controlling the fuel utilization rate of the SOFC stack 2 by the amount of load by way of the variable load 6 that is applied to the SOFC stack 2 through the electrical connector 22a, and preferably by simultaneously controlling the pre-reforming rate in the pre-reformer 3.

Figure 2 shows a second embodiment of a combined hydrogen and electricity supply system 1 in more detail. Figure 2 shows a system 1 comprising fluid regulating devices 14, 18, 101, 404 and a controlling device 17 providing control signals 17a-17f for controlling at least one or more of the fuel 20 being fed to the reformer 3, of the oxidant reactants 100 being introduced to the solid oxide fuel cell 2, of the water 40 respectively steam 40a being introduced to the reformer 3, and of a make-up gas 19 introduced to the burner 9. In addition means such as heat exchangers 103, 203, 206, 209, 212, 3a, 9a, 11a, sensors and connecting lines, not shown in detail, are provided for controlling the heat exchange within the solid oxide fuel cell system 1.

The combined hydrogen and electricity supply system 1 disclosed in figure 2 allows producing purified hydrogen 80 and electrical power P from a carbonaceous fuel feed 200 converted into a reformed process gas feed 205, and in particular allows to control the amount of purified hydrogen 80 produced by unit time and the electrical power output P produced. The system 1 has the advantage that the amount of purified hydrogen 80 produced by unit time and the electrical power output P produced may be varied in a wide range according to the demand.

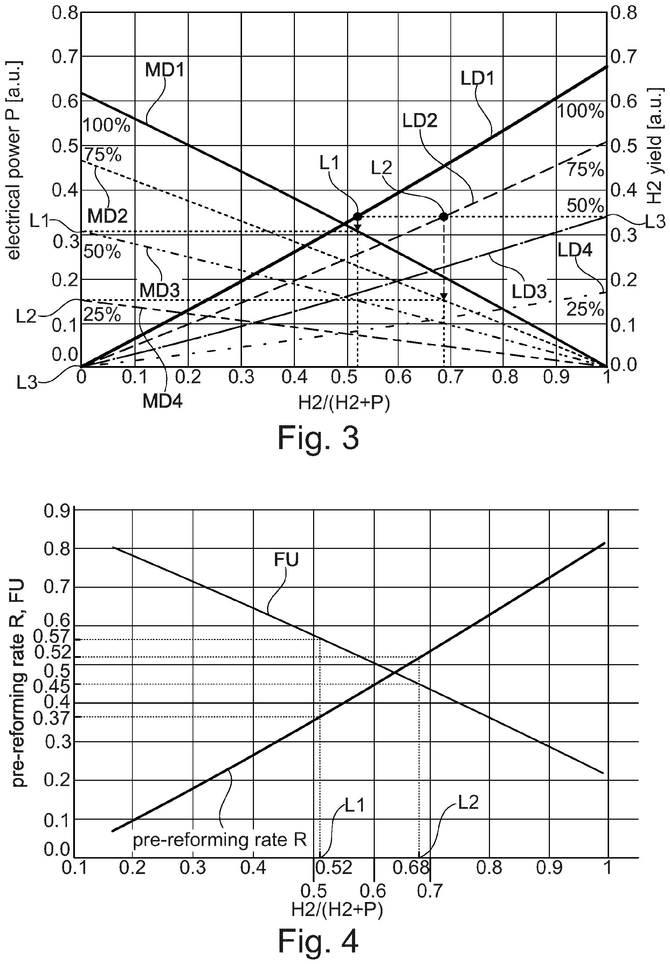

The modulation between electrical power P and output hydrogen production is managed by a control unit 17 as shown in Figure 2. The control unit 17 can act for example on the natural gas valve 14, make-up gas valve 18, air blower 101, water recirculation pump 404, hydrogen separation unit 8 the SOFC stack 2, and the electrical load 6. The control unit 17 monitors the pre-reformer outlet temperature T2, the SOFC stack outlet temperature T1 at the air side and the burner temperature T3. To change the operating point respectively the H2/electrical power P ratio, the amount of H2 available in the anode off-gas 208 for separation will be controlled by providing the pre-reformer with heat and by controlling the outlet temperature T2, so that the pre-reforming rate in the pre-reformer 3 is adapted. In addition, to change the operating point, the fuel utilisation FU in the SOFC stack will be adjusted by the electrical load 6 and accordingly as disclosed in Figure 4 . Preferably also the air flow, controlled by air blower 101, will be used for fine tuning of the SOFC stack outlet temperature T1. For each point of operation (e.g. fixed H2/(H2+P)), the production can in addition be scaled by varying fuel 20 and water 40 feed concurrently so as to keep the same steam to carbon ratio.

The fuel utilisation (FU) relates to the total electrical current (I) and the fuel flow per cell (f) through the relation:

$$FU = I/(nF^*f)$$

Where n is the number of electrons involved in the oxidation of 1 molecule of fuel (e.g. 8 for CH4), F is the Faraday constant (=96485 C/mol). It can therefore be varied either by changing the total current in the SOFC by varying the external electrical load 6, or by changing the fuel flow.

A hydrocarbon fuel 20, typically biogas or natural gas, is fed to a controllable valve 14 and optionally to a fuel pretreatment unit 13, typically a desulphurization unit, to get a poison-free carbonaceous fuel. The carbonaceous fuel feed 200 is mixed with steam 40a, preheated in a heat exchanger 203, and fed through conduit 204 into a pre-reformer 3 to produce the reformed process gas feed 205. Steam 40a is generated in a steam generator 11. The pre-reformer 3 is provided with heat by heat exchanger 3a. The reaction in the pre-reformer 3 preferably takes place in the presence of a reforming catalyst in a temperature range of 500 to 800 °C. The reformed process gas 205 is heated in heat exchanger 206 and is fed to the anode side 23 of the SOFC stack 2. The anode off-gas 208 leaving the SOFC stack 2 is cooled in heat exchanger 209 to for example about 300°C, and is first fed into a water gas shift reactor 4, is then cooled in a heat exchanger 212, and is fed to a water separator 15, a condenser, which at least separates water 40 from the gas stream 213, so that a water depleted stream 214 results. Water 40 is stored in a water tank 402, and may then be fed through conduits 403 and 405 and a water pump 404 to the steam generator 11. The water depleted stream 214 is fed to the hydrogen separation unit 8 to generate purified hydrogen 80 and a carbon dioxide rich gas stream 215 comprising also unseparated H2 and some CO, which is fed to the burner 9.

The SOFC stack 2 also comprises a cathode side 21 as well as an electrolyte 22. The SOFC stack 2 keeps the oxidant stream respectively air stream 100 and the reformed process gas 205 separated, so that they do not mix. No further details of the solid oxide fuel stack 2 are shown. Air 100 is slightly compressed in blower 101 to compressed cold air 102, is heated in heat exchanger 103 to pre-heated air 104 and is then fed to the cathode side 21 of the solid oxide fuel stack 2. The small overpressure of the compressed cold air 102, for example about 50mbar, is required to overcome the pressure drops in the heat exchangers and the SOFC stack 2. A hot depleted air stream 105 leaving the cathode side 21 of the SOFC stack 2 is fed to the burner 9. Electricity produced by the SOFC stack 2 is converted from DC to AC and is forwarded to a variable electrical load 6 not shown in detail. The electrical load 6 consumes the electrical power P.

Control unit 17 preferably controls through control lines 17a to 17g at least one of the blower 101, the H2 separation unit 8, the SOFC stack 2, the valve 14, the valve 18, the water pump 404 and the electrical load 6. In addition, in a preferred embodiment, the exit temperature T1 of the depleted air 105 leaving the SOFC stack 2, the exit temperature T2 of the reformate 205 leaving the pre-reformer 3 and the exit temperature T3 of the heat leaving the heat exchanger 9a is measured by control unit 17.

The control of the exit temperature T1 has the advantage that at any operating conditions defined by the pre-reforming rate and the FU, the temperature of the SOFC stack 2 may be monitored using sensor T1, which measures the temperature of the hot depleted air stream 105 exiting the SOFC. The temperature T1 can be adjusted or can be fine-tuned by varying the air flow via the blower 101. Increasing the air feed flow will increase the SOFC stack cooling and thereby lower the SOFC stack temperature.

Depending on the required amount of heat 9b, make-up gas 19 may be fed to the burner 9 to provide heat 9b to heat exchanger 9a, which provides heat to heat exchanger 3a.

Figure 3 shows one aspect of a control strategy of the system 1 disclosed in figure 2. Figure 3 shows a set of possible operation conditions that can be achieved with the system 1. The system 1 can be operated at specific conditions defined by a hydrogen yield, i.e. the amount of purified $H_2$ 80 produced by unit time, and an electrical power P output. The H2 yield and the electrical power P are shown in arbitrary units [a.u.]. The system 1 can be controlled in such a way that the system 1 delivers a given, predetermined amount of $H_2$ by unit time and a given electrical power P. Depending on external demand, the required amount of $H_2$ and electrical power P may change during operation of the system 1. The control unit 17 is able to control the system 1 such that the required amount of $H_2$ and electrical power P is achieved. This is achieved by simultaneously change the pre-reforming rate of the pre-reformer 3 and the fuel utilisation FU of the SOFC stack 2.

In addition to the pre-reforming rate and the fuel utilisation FU, also the fuel feed flow may be controlled. The different lines LD1, LD2, LD3, LD4, MD1, MD2, MD3, MD4 in figure 3 correspond to different amounts of fuel feed flow, LD1 and MD1 to 100% fuel feed, LD2 and MD2 to 75% fuel feed, LD3 and MD3 to 50% fuel feed and LD4 and MD4 to 25% fuel feed. The system 1 may be operated at different operation points, whereby each operation point is defined by a H2 yield and an electrical power P, or is defined by the ratio H2/(H2+P) and a fuel feed flow.

In the ratio H2/(H2 + P) H2 refers to the H2 produced by the system 1 by unit time, which means the purified hydrogen 80 by unit time. P refers to the produced electrical Power, which means electrical energy per unit time. The figures show H2 and P in arbitrary units. The unit of electrical power is Watt. For H2 the equivalent power based on the LHV (low heating value) may be used, which means H2=molar flow (mol/ s)*LHV(J/mol)=Watt.

In the example disclosed in figure 3, showing arbitrary units of H2 and P, three operating points L1, L2, L3 are represented corresponding to the same H2 yield (0.33) but with different electrical power outputs. The electrical power is 0.3 for point L1, 0.17 for point L2 and 0 for point L3. Point L1 can be achieved at full fuel feed (100%) and at a H2/(H2+P) ratio of 0.52. Point L2 can be achieved at partial fuel feed (75%) and H2/(H2+P) = 0.68. Point L3 can be achieved at 50% fuel feed and H2/(H2+P) = 1.

Any possible specific operating points L1, L2, L3, .... L100 in figure 3, defined by the fuel feed flow and the H2/(H2+P) ratio, can be achieved by the following three measures:

> 1) controlling the fuel feed flow with valve 14 and the water flow with water pump 404 concurrently in order to maintain the correct steam-to-carbon ratio in the feed stream 204 and to maintain the correct fuel feed stream;
> 2) adjusting the pre-reforming rate in the pre-reformer 3 by controlling the heat provided to the pre-reformer 3, and
> 3) adjusting the fuel utilisation FU in the solid oxide fuel cell 2, as disclosed in figure 4, by controlling the produced electrical power P.

Of particular interest is an operation of system 1 with the ratio H2/(H2+P) = 0, which means that no purified H2 is produced, but only electrical Power P is produced. Of particular interest is also an operation of the system 1 with the ratio H2/(H2+P) = 1, which means that only purified H2 is produced, but no electrical Power P is produced. As indicated in figure 3 by lines LD1, LD2, LD3, LD4, MD1, MD2, MD3, MD4, the amount of electrical Power P, with no purified H2 produced, respectively the amount of purified H2 with no electrical Power P produced, may be controlled based on the fuel feed flow.

Figure 4 discloses the relation between the H2/(H2+P) ratio and the pre-reforming rate R and fuel utilisation FU for the system 1 disclosed in figure 2. For instance, in the example disclosed in figure 3, operating point L1 has a H2/(H2+P) ratio of 0.52. Operating point L1 can be achieved by setting the fuel feed flow at full scale (100%), and, as disclosed in figure 4, setting the pre-reforming rate at 0.37 and the fuel utilisation FU at 0.57. Similarly, according to figure 3, operating point L2 has a H2/(H2+P) ratio of 0.68. According to figure 3, operating point L2 can be achieved by reducing the fuel feed flow to 75%, while, according to figure 4, changing the pre-reforming rate R to 0.52 and the fuel utilisation FU to 0.45.

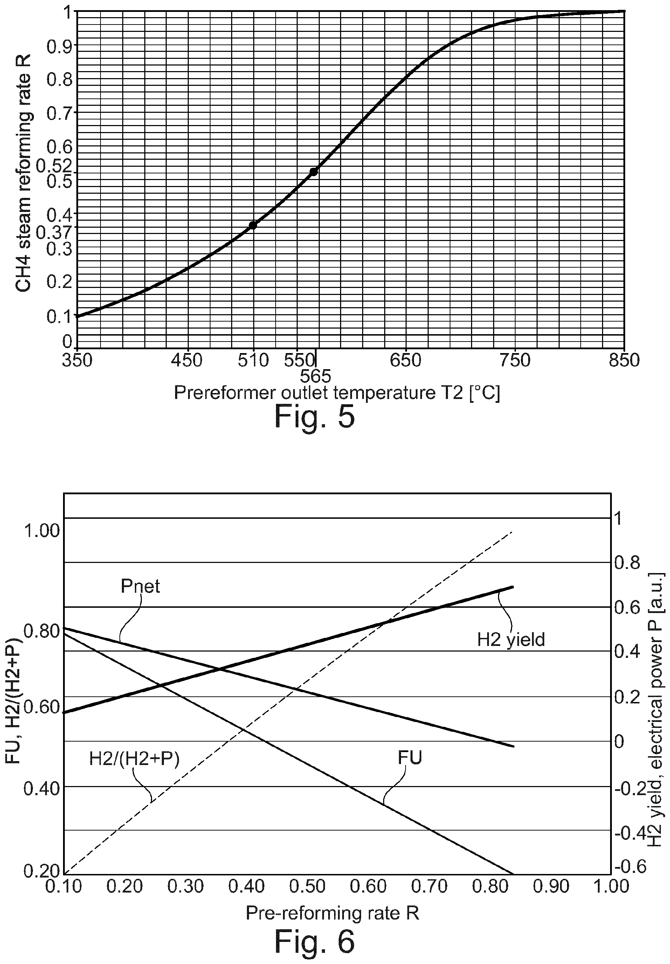

Figure 5 discloses that the pre-reforming rate R of an equilibrated pre-reformer 3 is related to the pre-reformer outlet temperature T2. This relation is shown in figure 5 in the case of steam reforming of methane with a steam to carbon ratio of 2. In order to achieve a pre-reforming rate of 0.37, the outlet temperature T2 of the pre-reformer 3 should be equilibrated at 510°C. Similarly a pre-reforming rate R of 0.52 corresponds to an equilibrium temperature of 565°C. The outlet temperature T2 can be controlled, for example, through the amount of heat transferred from the burner 9 by heat exchanger 9a to the pre-reformer 3 by heat exchanger 3a, by burning the hydrogen separation off-gas 215, and if required, in addition make-up gas 19, and/or by heat provided by electrical power, for example by the use of a resistive heating element arranged in or at the pre-reformer 3.

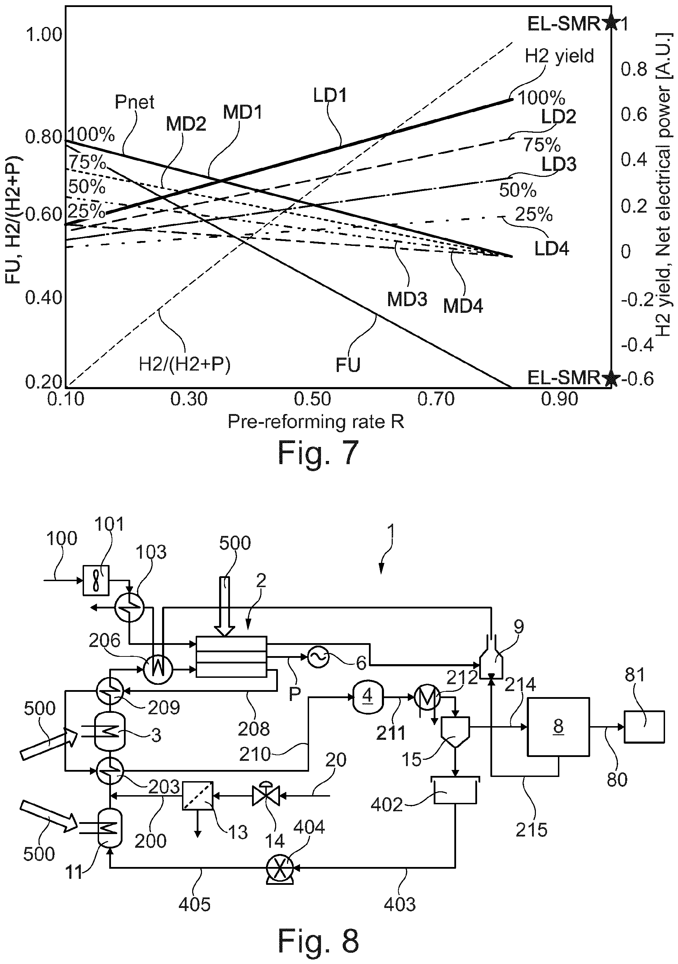

Figure 6 shows an example of a relation between pre-reforming rate R, fuel utilization FU, H2 yield, electrical power P and the H2/(H2+P) ratio in a SOFC system 1 to fulfil heat balance. Figure 7 shows, besides the graphs of figures 6, in addition the different lines LD1, LD2, LD3, LD4, MD1, MD2, MD3, MD4, which correspond to different amounts of fuel feed flow, LD1 and MD1 to 100% fuel feed, LD2 and MD2 to 75% fuel feed, LD3 and MD3 to 50% fuel feed and LD4 and MD4 to 25% fuel feed.

Figure 6 in particular shows the relation between pre-reforming rate R and fuel utilization FU in the SOFC stack 2 for heat management and the resulting electrical power P and $H_2$ production for each point of operation.

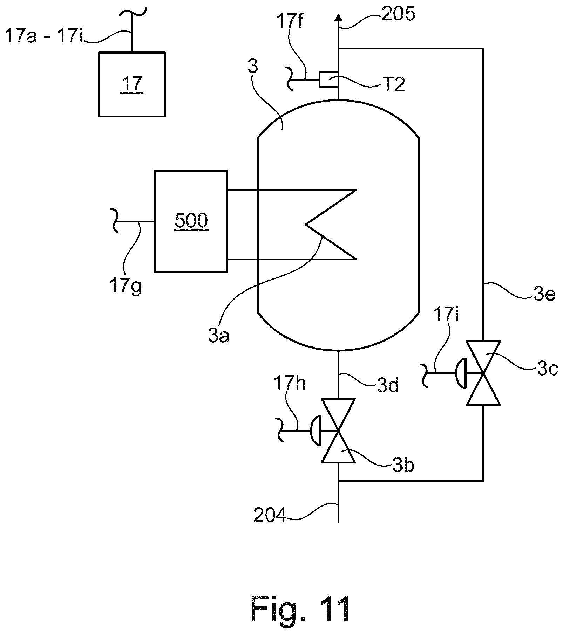

The modulation strategy is as follows. The modulation between the production of hydrogen and electrical power is achieved by varying the degree of pre-reforming and adjusting the fuel utilization FU in the SOFC stack 2 according to the relation given in figure 6. The degree of pre-reforming may be achieved by controlling the pre-reforming outlet temperature T2. The pre-reformer outlet temperature T2 is measured for example with a thermocouple and adjusted by varying the amount of heat provided to the pre-reformer 3 for the reforming reaction. This heat is for example generated by burning the hydrogen separation unit off-gas 215 and /or makeup-gas 19. It can also be produced by an electrically heated device in certain circumstances. In a further control option the outlet temperature T2 of the pre-reformer is controlled and adjusted as described in order to remain constant, and in addition, the feed stream comprising carbonaceous fuel and steam is split in two streams according to the desired degree of pre-reforming using for example regulating valves 3b, 3c, as disclosed in figure 11.

The pre-reforming rate R is the key control parameter in combination with FU. Figures 6 and 7 disclose an operation map for the combined hydrogen and electricity supply system 1. The starting point is the choice of a H2/(H2+P) operating point according to the demand of electrical power P and hydrogen $H_2$. Thereby the fuel feed flow is also adjusted. The pre-reforming rate R and the FU are then adjusted simultaneously according to figure 7. For instance, if it has been decided to operate the system 1 at H2/(H2+P)=0.7, corresponding to the production of 200kW equivalent $H_2$ (LHV = Lower Heating Value) and 80kW electrical power P. According to figure 6 or 7, the pre-reforming rate should be adjusted to 0.55 and the FU to 0.45.

In a first example the pre-reforming rate R can be adjusted by changing the pre-reformer outlet temperature T2 to 570°C, controlling the heat provided to the pre-reformer 3 by burning the hydrogen separation unit off-gas and/or additional make-up gas 19. In a second example the pre-reforming rate R can be adjusted by adjusting a by-pass as disclosed in figure 11. The fuel utilization FU can be adjusted for a fixed feed 20 flow by changing the electrical load P on the solid oxide fuel cell stack 2, or by changing the feed flow at fixed electrical load P.

By way of example, the operating point shall now be changed to 50kW equivalent $H_2$ keeping the electrical power P at 80kW, which means H2/(H2+P) becomes 0.385. As disclosed in figure 6 or 7, the corresponding pre-reforming rate R would be 0.25 and the fuel utilization FU is 0.66. As the electrical power output P remains unchanged, the latter would be achieved by lowering the feed flow 20 and 40 concurrently from 100% to 50%, as can be seen in figure 7, while lowering the pre-reformer outlet temperature T2 to 460°C or increasing the by-pass as disclosed in figure 11.

Figure 8 shows a further combined hydrogen and electricity supply system 1, which distinguishes over the combined hydrogen and electricity supply system 1 disclosed in figure 2 in particular insofar as at least one of the pre-reformer 3 and the steam generator 11 is heated using electricity 500. Figure 7 shows this operation mode in more detail. In Figure 7, the two operation points indicated by EL-SRM refer to "electrical heated steam methane reforming" and correspond to the case where excess electrical power is available, preferably at low cost, for example from the electrical grid or from solar panels, making its use economically favorable for the production of hydrogen. In this case the upper EL-SRM point refers to a hydrogen yield of 100%, and the lower EL-SRM point refers to electrical power P. The electrical power is negative (-0.55) as it is consumed in the process. The electrical power is used to produce heat, in particular through resistive heating elements, for the generation and the super-heating of steam in the evaporator 11, the reforming reaction in the pre-reformer 3, and the heating of the reformate gas 205. An advantageous embodiment is depicted in Figure 8. In a further preferred embodiment for example also the SOFC stack 2 may be heated with electricity 500. One advantage of such an embodiment is that hydrogen may be produced in the SOFC stack 2 by using only or by using most of the heat produced by electricity. A further advantage is, that when the SOFC stack 2 is electrically heated, most of the carbonaceous fuel is reformed in the SOFC stack 2, which allows reducing the size of the pre-reformer 3.

In addition any other part of the system 1 that need heat, for example fluids flowing, such as carbonaceous feed, oxidant flow, evaporator 11, steam superheating, make-up-gas may be electrically heated.

In a further advantageous embodiment the hydrogen 80 may be stored in a hydrogen storage container 81. In a further advantageous embodiment the hydrogen 80 stored in the container 81 may be fed to the SOFC stack 2, to produce electrical power. The system according to the invention may therefore be used to withdraw electricity from the electrical grid, and to later on supply the electrical grid with electricity. In an advantageous embodiment the system according to the invention may be used for grid control, to control supply and demand of electrical energy.

Figure 9 shows a further embodiment of a combined hydrogen and electricity supply system 1. The controlling device 17 for controlling various fluid regulating devices 14, 18, 101, 404 and for measuring various state variables such as temperatures or feed flows is not disclosed in detail. They are similar as disclosed in figure 2.

The controlling device 17 providing control signals 17a-17g for controlling at least one or more of the fuel 20 being fed to the reformer 3, of the oxidant reactants 100 being introduced to the solid oxide fuel cell 2, of the water 40 respectively steam 40a being introduced to the reformer 3, of a make-up gas 19 introduced to the burner 9, and the electrical load 6 being controlled. In addition means such as heat exchangers 103, 203, 206, 209, 212, 3a, 11a, sensors and connecting lines, not shown in detail, are provided for controlling the heat exchange within the system 1.

The system 1 disclosed in figure 9 allows producing purified hydrogen 80 and electrical power P from a reformed process gas feed 205, and in particular allows to control the amount of purified hydrogen 80 produced by unit time and the electrical power P produced.

The control unit 17 can act on the fuel valve 14, air blower 101, water recirculation pump 404, hydrogen separation unit 8, the electrical load 6 and the SOFC cell 2. It monitors the pre-reformer outlet temperature T2, the SOFC outlet temperature T1 at the air side and the burner temperature T3. To change the operating point respectively the H2/power ratio, the $H_2$ separation rate will be changed so as to reach the desired pre-reformer outlet temperature T2. The fuel utilisation (FU) in the SOFC stack 2 will be adjusted accordingly to Figure 6 and the air flow will be used for fine tuning of the SOFC stack outlet temperature T1. For each point of operation (e.g. fixed H2/(H2+P)), the production can in addition be scaled by varying fuel and water feed concurrently.

A hydrocarbon fuel 20, typically biogas or natural gas, is fed to a controllable valve 14 and to a fuel pretreatment unit 13 to get a poison-free carbonaceous fuel. The carbonaceous fuel feed 200 is mixed with steam 40a and fed through conduit 204 into a pre-reformer 3 to produce the reformed process gas feed 205. Steam 40a is generated in a steam generator 11. The pre-reformer 3 is provided with heat 9a by heat exchanger 3a. The reformed process gas 205 is heated in heat exchanger 206 and is fed to the anode side 23 of the solid oxide fuel cell stack 2. The anode off-gas 208 leaving the solid oxide fuel cell stack 2 is cooled in heat exchanger 206, and is first fed into the steam generator 11 and then into a water gas shift reactor 4, is then cooled in a heat exchanger 212, and is fed to a water separator 15, a condenser, which at least separates water 40 from the gas stream 213, so that a water depleted stream 214 results. Water 40 is stored in a water tank 402, and may then be fed through conduits 403 and 405 and a water pump 404 to the steam generator 11. The water depleted stream 214 is fed to the hydrogen separation unit 8 to generate purified hydrogen 80 and a carbon dioxide rich gas stream 215, which is fed to the burner 9.

The solid oxide fuel cell stack 2 also comprises a cathode side 21 as well as an electrolyte 22. The solid oxide fuel cell stack 2 keeps the air stream 100 and the reformed process gas 205 separated, so that they do not mix. Air 100 is slightly compressed in blower 101 to compressed cold air 102, is heated in heat exchanger 103 to pre-heated air 104 and is then fed to the cathode side 21 of the solid oxide fuel cell 2. A hot depleted air stream 105 leaving the cathode side 21 of the solid oxide fuel cell stack 2 is fed the heat exchanger 103 and then to the burner 9. Electricity produced by the solid oxide fuel cell stack 2 is converted from DC to AC and is forwarded to a variable electrical load 6. The electrical load 6 consumes the electrical power P.

Control unit 17 preferably controls through control lines 17a to 17g at least one of the blower 101, the H2 separation unit 8, the solid oxide fuel cell stack 2, the valve 14, the valve 18 and the water pump 404. In addition, in a preferred embodiment, the exit temperature T1 of the depleted air 105 leaving the solid oxide fuel cell stack 2, the exit temperature T2 of the reformate 205 leaving the pre-reformer 3 and the exit temperature T3 of the heat leaving the heat exchanger 9a is measured by control unit 17.

Depending on the required heat 9b, make-up gas 19 may be fed to the burner 9.

The combined hydrogen and electricity supply system 1 according to the invention has also the advantage that heat may be provided for external use. For example in figure 9, excess heat can be recovered from heat exchanger 212. One advantage is that the heat can be valorised, which increases the overall system efficiency. The temperature levels and heat amount vary depending on the operating point. Heat could be available for example between 400°C and 250°C. It could be used to produce steam or hot water, for example on the level of 35 to 55 °C for example for domestic or sanitary water, for car cleaning, or even cooling, using an adsorption chiller.

Figure 10 shows a first embodiment for controlling the degree of pre-reforming in the pre-reformer 3, namely by control of the outlet temperature T2. The pre-reformer 3 may be heated by an electrical power source 500 and a heat exchanger 3a or by any other heat source. In figure 10 and 11, the element 3a is a heating element. However in figure 9 the element 3a is a heat exchanger. The control unit 17 controls the exit temperature T2 and controls the electrical power source 500 so that the exit temperature T2 corresponds to a predetermined temperature to control the pre-reforming rate.

Figure 11 shows a second embodiment for controlling the degree of pre-reforming. The pre-reformer 3 is heated such by the electrical power source 500 or any other heat source that the outlet temperature T2 is kept constant. The pre-reforming rate is then adjusted by varying the flows 3d and 3e through the control valves 3b and 3c, so that part of the fuel feed/steam stream 204 bypasses the pre-reformer 3.

**Claims**

1.    A method for producing purified hydrogen (80) and electrical power (P) in a combined hydrogen and electricity supply system (1) whereby the ratio between purified hydrogen (80) and electrical power (P) can be adjusted, the method comprising the steps of:

- introducing a carbonaceous fuel (20) and steam (40) into a pre-reformer (3), and in the pre-reformer (3) reforming part of the carbonaceous fuel (20) by steam reforming into a first reformate gas (S1) comprising hydrogen and carbon monoxide so that unconverted carbonaceous fuel (20a) remains;
- introducing the unconverted carbonaceous fuel (20a) and the first reformate gas (S1) into an anode side (23) of a solid oxide fuel cell stack (2);
- in the solid oxide fuel cell stack (2) reforming at least part of the unconverted carbonaceous fuel (20a) by internal steam reforming into a second reformate gas (S2) comprising mainly hydrogen and carbon monoxide,
- introducing an oxygen containing gas (100) into a cathode side (21) of the solid oxide fuel cell stack (2),
- in the solid oxide fuel cell stack (2) converting oxygen of the oxygen containing gas as well as hydrogen and carbon monoxide of the first and second reformate gas (S1, S2) into electrical power (P) and an anode off-gas (208);
- introducing the anode off-gas (208) into a hydrogen separation unit (8), and
- converting in the hydrogen separation unit (8) the anode off-gas (208) into purified hydrogen (80) and an off-gas (215),
whereby the reforming in the pre-reformer (3) is performed as external reforming,
**characterized in that** the pre-reformer (3) being thermally separated from the solid oxide fuel cell stack (2) to allow independent thermal control of the pre-reformer (3) and the solid oxide fuel cell stack (2) to separately control external reforming and internal reforming,
that a controllable heating source is thermally coupled to the pre-reformer (3) to provide the pre-reformer (3) with controlled heat to control the reforming rate of the pre-reformer (3),
that the electrical power (P) production is controlled to provide heat for internal reforming and to control internal reforming, and
that the amount of purified hydrogen (80) as well as the amount of electrical power (P) produced is modulated by a combined control of external reforming, internal reforming and a fuel utilization rate (FU) of the solid oxide fuel cell stack (2).

2.    The method of claim 1, further comprising the step of heating the solid oxide fuel cell stack (2) through external electrical energy, to provide heat to the solid oxide fuel cell stack (2) for internal reforming.

3.    The method of one of claims 1 to 2, wherein the purified hydrogen (80) is not recirculated into the solid oxide fuel cell stack (2).

4. The method of one of claims 1 to 3, further comprising the step of controlling the fuel utilization rate (FU) by varying an external electrical load (6) connected to the solid oxide fuel cell stack (2).

5. The method of one of claims 1 to 4, further comprising the step of controlling the fuel feed flow of the carbonaceous fuel (20).

6. The method of one of the preceding claims, further comprising the step of controlling the fuel utilization rate (FU) by varying the fuel flow (f) of the carbonaceous fuel (20)

7. The method of one of claims 1 to 5, further comprising the step of controlling the reforming rate of the pre-reformer (3) by controlling the pre-reformer outlet temperature (T2).

8. The method of one of claims 6 to 7, further comprising the step of

   - controlling the heat provided to the pre-reformer (3),
   - limiting the rate of the external reforming by keeping the pre-reformer outlet temperature (T2), which means the outlet temperature of the first reformate gas (S1) and the remaining carbonaceous fuel (20a), below 450°C, so that reforming of up to 90% takes place in the solid oxide fuel cell stack (2) by internal reforming, to allow a high electrical power (P) production.

9. The method of one of claims 6 to 7, further comprising the step of

   - controlling the heat provided to the pre-reformer (3),
   - keeping the pre-reformer outlet temperature (T2), which means the outlet temperature of the first reformate gas (S1) and the remaining carbonaceous fuel (20a), between 450°C and 850°C, and
   - varying the hydrogen (80) production by controlling the external electrical load (6).

10. The method of one of the previous claims, further comprising the step of burning the off-gas (215) and/or a make-up gas (19) to thereby provide heat to the pre-reformer (3) and/or a steam generator (11).

11. The method of one of the previous claims, further comprising the step of electrically heating at least one of the pre-reformer (3), the steam generator (11), the SOFC stack (2), a fluid flowing such a carbonaceous feed or oxidant flow.

12. The method of one of the previous claims, further comprising the steps of:

   - splitting a stream (204) of carbonaceous fuel (20) and steam (40) in a first part (3d) and a second part (3e),
   - feeding the first part (3e) into the pre-reformer (3),
   - bypassing the pre-reformer (3) with the second part (3e),
   - combining the first and second part (3d,3e) after the pre-reformer (3) to a combined stream (205), and
   - controlling the amount of the first and second part (3d, 3e) to thereby control the reforming rate of the combined stream (205).

13. The method of one of the previous claims, further comprising the step of controlling the reforming rate of the solid oxide fuel cell stack (2) by- measuring a temperature of the solid oxide fuel cell stack (2), in particular the outlet temperature (T1) of the cathode outlet (105), and

   - based on the measured temperature of the solid oxide fuel cell stack (2) cooling the solid oxide fuel cell stack (2) by controlling the amount of the oxygen containing gas (100) introduced in the cathode side (21).

14. The method of one of the previous claims, further comprising the step of managing the heat balance between solid oxide fuel cell stack (2) and pre-reformer (3) by allowing internal reforming of up to 90% to take place in the solid oxide fuel cell stack (2).

15. A combined hydrogen and electricity supply system for producing hydrogen (80), electrical power (P) and co-production, the system comprising:

   - a solid oxide fuel cell stack (2),
   - a pre-reformer (3),

- an electrical load (6) consuming the electrical power (P),
- a hydrogen separation unit (8),
- a control unit (17), and
- a carbonaceous fuel source,
- the solid oxide fuel cell stack (2) being coupled to the electrical load (6) and being coupled to the hydrogen separation unit (8), **characterized in**
- **that** the pre-reformer (3) being thermally separated from the solid oxide fuel cell stack (2) to allow independent thermal control of the pre-reformer (3) and the solid oxide fuel cell stack (2),
- **that** a steam source provides a stream of steam,
- **that** the pre-reformer (3) being connected to a stream of the carbonaceous fuel source and the stream of the steam source, wherein said pre-reformer (3) produces a first reformate gas (S1) comprising at least hydrogen, carbon monoxide and unconverted carbonaceous fuel (20a),
- **that** the solid oxide fuel cell stack (2) being coupled to the pre-reformer (3) to receive the first reformate gas (S1) and the unconverted carbonaceous fuel (20a);
- **that** the electrical load (6) is a controllable, variable electrical load (6),
- **that** the pre-reformer (3) is thermally coupled to a controllable heating source (9), and
- **that** the control unit (17) is adapted to at least control the variable electrical load (6) and the heat provided by the heating source (9) to independently control internal and external reforming, to thereby control the ratio between electrical power (P) and amount of hydrogen (80) being produced.

16. The system (1) according to claim 15, **characterized in** means for providing external heat to the solid oxide fuel cell stack (2).

17. The system (1) according to claim 15 or 16, wherein there is no recirculation of purified hydrogen (80) back to the solid oxide fuel cell stack (2).

18. The system (1) according to one of claims 15 to 17, **characterized in that** a controllable valve (14) is fluidly connected with the carbonaceous fuel source, and that the control unit (17) is adapted to control by controllable valve (14) the flow (f) of the stream of carbonaceous fuel (20) to the pre-reformer (3), to thereby control the amount of $H_2$ produced by unit time and the electrical power P produced by unit time.

19. The system (1) according to one of claims 15 and 18, **characterized in that** an electrical heating (500) is adapted to provide heat to at least one of the pre-reformer (3), the steam generator (11) and the SOFC stack (2).

20. Use of a combined hydrogen and electricity supply system (1) comprising a solid oxide fuel cell stack (2) and an external pre-reformer (3) according to one of claims 15 to 19, to convert a carbonaceous fuel (20) to hydrogen by only using electrical power (P) as a heat source for external reforming, to store hydrogen, and to convert stored hydrogen to electrical power (P).

21. Use of the system according to one of claims 15 to 19 in an electrical grid to balance between production and consumption of electrical energy.


**Patentansprüche**

1. Verfahren zur Produktion von gereinigtem Wasserstoff (80) und elektrischer Leistung (P) in einem kombinierten Wasserstoff- und Stromversorgungssystem (1), wobei das Verhältnis zwischen gereinigtem Wasserstoff (80) und elektrischer Leistung (P) eingestellt werden kann, wobei das Verfahren die folgenden Schritte umfasst:

- Einführen eines kohlenstoffhaltigen Brennstoffs (20) und Dampf (40) in einen Vorreformer (3), und in dem Vorreformer (3) Reformieren eines Teils des kohlenstoffhaltigen Brennstoffs (20) durch Dampfreformierung in ein erstes Reformatgas (S1), das Wasserstoff und Kohlenmonoxid umfasst, so dass nicht umgewandelter kohlenstoffhaltiger Brennstoff (20a) zurückbleibt;
- Einführen des nicht umgewandelten kohlenstoffhaltigen Brennstoffs (20a) und des ersten Reformatgases (S1) in eine Anodenseite (23) eines Festoxid-Brennstoffzellenstapels (2);
- in dem Festoxid-Brennstoffzellenstapel (2) Reformieren zumindest eines Teils des nicht umgewandelten kohlenstoffhaltigen Brennstoffs (20a) durch internes Dampfreformieren in ein zweites Reformatgas (S2), das hauptsächlich Wasserstoff und Kohlenmonoxid umfasst,

- Einführen eines sauerstoffhaltigen Gases (100) in eine Kathodenseite (21) des Festoxid-Brennstoffzellenstapels (2),
- in dem Festoxid-Brennstoffzellenstapel (2) Umwandeln des Sauerstoffs des sauerstoffhaltigen Gases sowie Wasserstoff und Kohlenmonoxid des ersten und zweiten Reformatgases (S1, S2) in elektrische Energie (P) und ein Anodenabgas (208);
- Einleiten des Anodenabgases (208) in eine Wasserstofftrenneinheit (8), und
- Umwandeln des Anodenabgases (208) in der Wasserstofftrenneinheit (8) in gereinigten Wasserstoff (80) und ein Abgas (215),
wobei die Reformierung im Vorreformer (3) als externe Reformierung durchgeführt wird,
**dadurch gekennzeichnet, dass** der Vorreformer (3) thermisch von dem Festoxid-Brennstoffzellenstapel (2) getrennt ist, um eine unabhängige thermische Steuerung des Vorreformers (3) und des Festoxid-Brennstoffzellenstapels (2) zu ermöglichen, um das externe Reformieren und das interne Reformieren getrennt zu steuern, dass eine steuerbare Heizquelle thermisch mit dem Vorreformer (3) gekoppelt ist, um den Vorreformer (3) mit gesteuerter Wärme zu versorgen, um die Reformierungsrate des Vorreformers (3) zu steuern,
dass die Erzeugung von elektrischer Leistung (P) gesteuert wird, um Wärme für die interne Reformierung bereitzustellen und die interne Reformierung zu steuern,
und
dass sowohl die Menge an gereinigtem Wasserstoff (80) als auch die Menge an erzeugter elektrischer Leistung (P) durch eine kombinierte Steuerung des externen Reformierens, des internen Reformierens und einer Brennstoffausnutzungsrate (FU) des Festoxid-Brennstoffzellenstapels (2) moduliert wird.

2. Verfahren nach Anspruch 1, zudem umfassend den Schritt des Erwärmens des Festoxid-Brennstoffzellenstapels (2) durch externe elektrische Energie, um dem Festoxid-Brennstoffzellenstapel (2) Wärme zur internen Reformierung zuzuführen.

3. Verfahren nach einem der Ansprüche 1 bis 2, wobei der gereinigte Wasserstoff (80) nicht in den Festoxid-Brennstoffzellenstapel (2) rezirkuliert wird.

4. Verfahren nach einem der Ansprüche 1 bis 3, zudem umfassend den Schritt der Steuerung der Brennstoffausnutzungsrate (FU) durch Variieren einer externen elektrischen Last (6), die mit dem Festoxid-Brennstoffzellenstapel (2) verbunden ist.

5. Verfahren nach einem der Ansprüche 1 bis 4, zudem umfassend den Schritt der Steuerung des Brennstoffzufuhrstroms des kohlenstoffhaltigen Brennstoffs (20).

6. Verfahren nach einem der vorhergehenden Ansprüche, zudem umfassend den Schritt der Steuerung der Brennstoffausnutzungsrate (FU) durch Variieren des Brennstoffflusses (f) des kohlenstoffhaltigen Brennstoffs (20)

7. Verfahren nach einem der Ansprüche 1 bis 5, zudem umfassend den Schritt der Steuerung der Reformierungsrate des Vorreformers (3) durch Steuerung der Vorreformer-Auslasstemperatur (T2).

8. Verfahren nach einem der Ansprüche 6 bis 7, zudem umfassend den Schritt

- Kontrolle der dem Vorreformer zugeführten Wärme (3),
- Begrenzen der Rate der externen Reformierung, indem die Vorreformer-Auslasstemperatur (T2), d.h. die Auslasstemperatur des ersten Reformatgases (S1) und des verbleibenden kohlenstoffhaltigen Brennstoffs (20a), unter 450°C gehalten wird, so dass im Festoxid-Brennstoffzellenstapel (2) durch interne Reformierung eine Reformierung von bis zu 90% stattfindet, um die Produktion einer hohen elektrischen Leistung (P) zu ermöglichen.

9. Verfahren nach einem der Ansprüche 6 bis 7, zudem umfassend den Schritt:

- Steuern der dem Vorreformer (3) zugeführten Wärme,
- Halten der Vorreformer-Auslasstemperatur (T2), d.h. der Auslasstemperatur des ersten Reformatgases (S1) und des verbleibenden kohlenstoffhaltigen Brennstoffs (20a), zwischen 450°C und 850°C, und
- Variieren der Wasserstoff (80) Produktion durch Steuern der externen elektrischen Last (6).

10. Verfahren nach einem der vorhergehenden Ansprüche, zudem umfassend den Schritt der Verbrennung des Abgases (215) und/oder eines Zusatzgases (19), um dadurch Wärme an den Vorreformer (3) und/oder einen Dampferzeuger (11) zu liefern.

11. Verfahren nach einem der vorhergehenden Ansprüche, zudem umfassend den Schritt des elektrischen Erhitzens mindestens eines der folgenden Elemente: Vorreformer (3), Dampferzeuger (11), SOFC-Stapel (2), ein fliessendes Fluid wie ein kohlenstoffhaltiger Zufuhrstrom oder Oxidationsmittelstrom.

12. Verfahren nach einem der vorhergehenden Ansprüche, zudem umfassend die Schritte

- Aufspalten eines Stroms (204) aus kohlenstoffhaltigem Brennstoff (20) und Dampf (40) in einen ersten Teil (3d) und einen zweiten Teil (3e),
- Einspeisen des ersten Teils (3e) in den Vorreformer (3),
- Umgehen des Vorreformers (3) mit dem zweiten Teil (3e),
- Kombinieren des ersten und zweiten Teils (3d, 3e) nach dem Vorreformer (3) zu einem kombinierten Strom (205), und -Steuern der Menge des ersten und zweiten Teils (3d, 3e), um dadurch die Reformierungsrate des kombinierten Stroms (205) zu steuern.

13. Verfahren nach einem der vorhergehenden Ansprüche, zudem umfassend den Schritt des Steuerns der Reformierungsrate des Festoxid-Brennstoffzellenstapels (2) durch

- Messen einer Temperatur des Festoxid-Brennstoffzellenstapels (2), insbesondere der Auslasstemperatur (T1) des Kathodenauslasses (105), und
- basierend auf der gemessenen Temperatur des Festoxid-Brennstoffzellenstapels (2) Kühlen des Festoxid-Brennstoffzellenstapels (2) durch Steuern der Menge des sauerstoffhaltigen Gases (100), das in die Kathodenseite (21) eingeführt wird.

14. Verfahren nach einer der vorhergehenden Behauptungen, zudem umfassend den Schritt des Managements des Wärmegleichgewichtes zwischen Festoxid-Brennstoffzellenstapel (2) und Vorreformer (3), indem eine interne Reformierung von bis zu 90% im Festoxid-Brennstoffzellenstapel (2) ermöglicht wird.

15. Kombiniertes Wasserstoff- und Stromversorgungssystem zur Produktion von Wasserstoff (80), elektrischer Leistung (P) und Koproduktion, wobei das System umfasst:

- einen Festoxid-Brennstoffzellenstapel (2),
- einen Vorreformer (3),
- eine elektrische Last (6), welche die elektrische Leistung (P) verbraucht,
- eine Wasserstoff-Trenneinheit (8),
- eine Steuereinheit (17), und
- eine kohlenstoffhaltige Brennstoffquelle,
- wobei der Festoxid-Brennstoffzellenstapel (2) mit der elektrischen Last (6) und mit der Wasserstofftrenneinheit (8) gekoppelt ist,
**dadurch gekennzeichnet,**
- **dass** der Vorreformer (3) thermisch von dem Festoxid-Brennstoffzellenstapel (2) getrennt ist, um eine unabhängige thermische Steuerung des Vorreformers (3) und des Festoxid-Brennstoffzellenstapels (2) zu ermöglichen,
- **dass** eine Dampfquelle einen Dampfstrom liefert,
- **dass** der Vorreformer (3) mit einem Strom der kohlenstoffhaltigen Brennstoffquelle und dem Strom der Dampfquelle verbunden ist, wobei der Vorreformer (3) ein erstes Reformatgas (S1) erzeugt, das mindestens Wasserstoff, Kohlenmonoxid und nicht umgewandelten kohlenstoffhaltigen Brennstoff (20a) umfasst,
- **dass** der Festoxid-Brennstoffzellenstapel (2) mit dem Vorreformer (3) gekoppelt ist, um das erste Reformatgas (S1) und den nicht umgewandelten kohlenstoffhaltigen Brennstoff (20a) aufzunehmen;
- **dass** die elektrische Last (6) eine steuerbare, variable elektrische Last (6) ist,
- **dass** der Vorreformer (3) thermisch mit einer steuerbaren Heizquelle (9) gekoppelt ist, und
- **dass** die Steuereinheit (17) so ausgelegt ist, dass sie zumindest die variable elektrische Last (6) und die von der Heizquelle (9) gelieferte Wärme steuert, um das interne und externe Reformieren unabhängig zu steuern, um dadurch das Verhältnis zwischen der elektrischen Leistung (P) und der Menge des erzeugten Wasserstoffs (80) zu steuern.

**16.** System (1) nach Anspruch 15, **gekennzeichnet durch** Mittel zur Bereitstellung externer Wärme für den Festoxid-Brennstoffzellenstapel (2).

**17.** System (1) nach Anspruch 15 oder 16, bei dem es keine Rückführung von gereinigtem Wasserstoff (80) zurück zum Festoxid-Brennstoffzellenstapel (2) gibt.

**18.** System (1) nach einem der Ansprüche 15 bis 17, **dadurch gekennzeichnet, dass** ein steuerbares Ventil (14) in Fluidverbindung mit der kohlenstoffhaltigen Brennstoffquelle steht, und dass die Steuereinheit (17) geeignet ist, durch das steuerbare Ventil (14) den Fluss (f) des Stroms des kohlenstoffhaltigen Brennstoffs (20) zum Vorreformer (3) zu steuern, um dadurch die Menge des erzeugten $H_2$ pro Zeiteinheit und die erzeugte elektrische Leistung P pro Zeiteinheit zu steuern.

**19.** System (1) nach einem der Ansprüche 15 und 18, **dadurch gekennzeichnet, dass** eine elektrische Heizung (500) so ausgelegt ist, dass sie Wärme an mindestens einen von der Vorreformer (3), den Dampferzeuger (11) und den SOFC-Stack (2) liefert.

**20.** Verwendung eines kombinierten Wasserstoff- und Stromversorgungssystems (1), das einen Festoxid-Brennstoffzellenstapel (2) und einen externen Vorreformer (3) nach einem der Ansprüche 15 bis 19 umfasst, zur Umwandlung eines kohlenstoffhaltigen Brennstoffs (20) in Wasserstoff unter ausschließlicher Verwendung von elektrischer Energie (P) als Wärmequelle für die externe Reformierung, zur Speicherung von Wasserstoff und zur Umwandlung von gespeichertem Wasserstoff in elektrische Energie (P).

**21.** Verwendung des Systems gemäß einem der Ansprüche 15 bis 19 in einem Stromnetz zum Ausgleich zwischen Erzeugung und Verbrauch elektrischer Energie.

**Revendications**

**1.** Procédé pour la production d'hydrogène purifié (80) et de puissance électrique (P) dans un système d'approvisionnement combiné d'hydrogène et d'électricité (1), le rapport entre l'hydrogène purifié (80) et la puissance électrique (P) pouvant être ajusté, le procédé comprenant les étapes de :

- introduction d'un combustible carboné (20) et de vapeur (40) dans un pré-reformeur (3), et dans le pré-reformeur (3), reformage d'une partie du combustible carboné (20) par reformage à la vapeur en un premier gaz de reformat (S1) comprenant de l'hydrogène et du monoxyde de carbone de sorte qu'il reste du combustible carboné non converti (20a) ;
- introduction du combustible carboné non converti (20a) et du premier gaz de reformat (S1) dans un côté anode (23) d'un empilement (2) de piles à combustible à oxyde solide ;
- dans l'empilement (2) de piles à combustible à oxyde solide, reformage d'au moins une partie du combustible carboné non converti (20a) par reformage interne à la vapeur en un deuxième gaz de reformat (S2) comprenant principalement de l'hydrogène et du monoxyde de carbone,
- introduction d'un gaz (100) contenant de l'oxygène dans un côté cathode (21) de l'empilement (2) de piles à combustible à oxyde solide,
- dans l'empilement (2) de piles à combustible à oxyde solide, conversion d'oxygène du gaz contenant de l'oxygène ainsi que de l'hydrogène et du monoxyde de carbone du premier et du deuxième gaz de reformat (S1, S2) en puissance électrique (P) et en un effluent gazeux d'anode (208) ;
- introduction de l'effluent gazeux d'anode (208) dans une unité (8) de séparation d'hydrogène, et
- conversion, dans l'unité (8) de séparation d'hydrogène, de l'effluent gazeux d'anode (208) en hydrogène purifié (80) et en un effluent gazeux (215),
le reformage dans le pré-reformeur (3) étant réalisé en tant que reformage externe,
**caractérisé en ce que** le pré-reformeur (3) est thermiquement séparé de l'empilement (2) de piles à combustible à oxyde solide pour permettre une régulation thermique indépendante du pré-reformeur (3) et de l'empilement (2) de piles à combustible à oxyde solide pour réguler séparément le reformage externe et le reformage interne,
**en ce qu'**une source de chaleur régulable est couplée thermiquement au pré-reformeur (3) pour fournir au pré-reformeur (3) de la chaleur régulée pour réguler la vitesse de reformage du pré-reformeur (3),
**en ce que** la production de puissance électrique (P) est régulée pour fournir de la chaleur pour le reformage interne et pour réguler le reformage interne,
et

**en ce que** la quantité d'hydrogène purifié (80) ainsi que la quantité de puissance électrique (P) produites sont modulées par une régulation combinée du reformage externe, du reformage interne et d'une vitesse d'utilisation de combustible (FU) de l'empilement (2) de piles à combustible à oxyde solide.

2. Procédé selon la revendication 1, comprenant en outre l'étape de chauffage de l'empilement (2) de piles à combustible à oxyde solide par l'intermédiaire d'énergie électrique externe, pour fournir de la chaleur à l'empilement (2) de piles à combustible à oxyde solide pour le reformage interne.

3. Procédé selon l'une des revendications 1 et 2, l'hydrogène purifié (80) n'étant pas recirculé dans l'empilement (2) de piles à combustible à oxyde solide.

4. Procédé selon l'une des revendications 1 à 3, comprenant en outre l'étape de régulation de la vitesse d'utilisation de combustible (FU) par variation d'une charge électrique externe (6) reliée à l'empilement (2) de piles à combustible à oxyde solide.

5. Procédé selon l'une des revendications 1 à 4, comprenant en outre l'étape de régulation du flux d'alimentation de combustible du combustible carboné (20).

6. Procédé selon l'une des revendications précédentes, comprenant en outre l'étape de régulation de la vitesse d'utilisation de combustible (FU) par variation de l'écoulement (f) de combustible du combustible carboné (20).

7. Procédé selon l'une des revendications 1 à 5, comprenant en outre l'étape de régulation de la vitesse de reformage du pré-reformeur (3) par régulation de la température de sortie de pré-reformeur (T2).

8. Procédé selon l'une des revendications 6 et 7, comprenant en outre l'étape de

   - régulation de la chaleur fournie au pré-reformeur (3),
   - limitation de la vitesse du reformage externe par maintien de la température de sortie de pré-reformeur (T2), c'est-à-dire la température de sortie du premier gaz de reformat (S1) et du combustible carboné restant (20a), en dessous de 450 °C, de sorte qu'un reformage allant jusqu'à 90 % a lieu dans l'empilement (2) de piles à combustible à oxyde solide par reformage interne, pour permettre une production de puissance électrique (P) élevée.

9. Procédé selon l'une des revendications 6 et 7, comprenant en outre l'étape de

   - régulation de la chaleur fournie au pré-reformeur (3),
   - maintien de la température de sortie de pré-reformeur (T2), c'est-à-dire la température de sortie du premier gaz de reformat (S1) et du combustible carboné restant (20a), entre 450 °C et 850 °C, et
   - variation de la production d'hydrogène (80) par régulation de la charge électrique externe (6).

10. Procédé selon l'une des revendications précédentes, comprenant en outre l'étape de combustion de l'effluent gazeux (215) et/ou d'un gaz d'appoint (19) pour fournir ainsi de la chaleur au pré-reformeur (3) et/ou à un générateur de vapeur (11).

11. Procédé selon l'une des revendications précédentes, comprenant en outre l'étape de chauffage électrique d'au moins l'un parmi le pré-reformeur (3), le générateur de vapeur (11), l'empilement (2) de SOFC, un fluide s'écoulant tel qu'une alimentation carbonée ou un flux oxydant.

12. Procédé selon l'une des revendications précédentes, comprenant en outre les étapes de :

   - division d'un flux (204) de combustible carboné (20) et de vapeur (40) en une première partie (3d) et une deuxième partie (3e),
   - alimentation de la première partie (3e) dans le pré-reformeur (3),
   - contournement du pré-reformeur (3) avec la deuxième partie (3e),
   - combinaison de la première et de la deuxième partie (3d, 3e) après le pré-reformeur (3) en un flux combiné (205), et
   - régulation de la quantité de la première et de la deuxième partie (3d, 3e) pour ainsi réguler la vitesse de reformage du flux combiné (205).

13. Procédé selon l'une des revendications précédentes, comprenant en outre l'étape de régulation de la vitesse de reformage de l'empilement (2) de piles à combustible à oxyde solide par - la mesure d'une température de l'empilement (2) de piles à combustible à oxyde solide, en particulier de la température de sortie (T1) de la sortie de cathode (105), et

    - sur la base de la température mesurée de l'empilement (2) de piles à combustible à oxyde solide, le refroidissement de l'empilement (2) de piles à combustible à oxyde solide par la régulation de la quantité du gaz (100) contenant de l'oxygène introduit dans le côté cathode (21).

14. Procédé selon l'une des revendications précédentes, comprenant en outre l'étape de gestion du bilan thermique entre l'empilement (2) de piles à combustible à oxyde solide et le pré-reformeur (3) en laissant avoir lieu le reformage interne jusqu'à 90 % dans l'empilement (2) de piles à combustible à oxyde solide.

15. Système d'approvisionnement combiné d'hydrogène et d'électricité pour la production d'hydrogène (80), de puissance électrique (P) et la coproduction, le système comprenant :

    - un empilement (2) de piles à combustible à oxyde solide,
    - un pré-reformeur (3),
    - une charge électrique (6) consommant la puissance électrique (P),
    - une unité de séparation d'hydrogène (8),
    - une unité de régulation (17), et
    - une source de combustible carboné,
    - l'empilement (2) de piles à combustible à oxyde solide étant couplé à la charge électrique (6) et étant couplé à l'unité de séparation d'hydrogène (8),
    **caractérisé**
    - **en ce que** le pré-reformeur (3) est séparé thermiquement de l'empilement (2) de piles à combustible à oxyde solide pour permettre la régulation thermique indépendante du pré-reformeur (3) et de l'empilement (2) de piles à combustible à oxyde solide,
    - **en ce qu'**une source de vapeur fournit un flux de vapeur,
    - **en ce que** le pré-reformeur (3) est relié à un flux de la source de combustible carboné et au flux de la source de vapeur, ledit pré-reformeur (3) produisant un premier gaz de reformat (S1) comprenant au moins de l'hydrogène, du monoxyde de carbone et un combustible carboné non converti (20a),
    - **en ce que** l'empilement (2) de piles à combustible à oxyde solide est couplé au pré-reformeur (3) pour recevoir le premier gaz de reformat (S1) et le combustible carboné non converti (20a),
    - **en ce que** la charge électrique (6) est une charge électrique (6) régulable, variable,
    - **en ce que** le pré-reformeur (3) est couplé thermiquement à une source de chaleur régulable (9), et
    - **en ce que** l'unité de régulation (17) est conçue pour au moins réguler la charge électrique variable (6) et la chaleur fournie par la source de chaleur (9) pour réguler indépendamment le reformage interne et externe, pour réguler ainsi le rapport entre la puissance électrique (P) et la quantité d'hydrogène (80) produites.

16. Système (1) selon la revendication 15, **caractérisé par** des moyens pour fournir de la chaleur externe à l'empilement (2) de piles à combustible à oxyde solide.

17. Système (1) selon la revendication 15 ou 16, dans lequel il n'y a pas de recirculation d'hydrogène purifié (80) de retour vers l'empilement (2) de piles à combustible à oxyde solide.

18. Système (1) selon l'une des revendications 15 à 17, **caractérisé en ce qu'**une valve régulable (14) est reliée de manière fluidique à la source de combustible carboné, et **en ce que** l'unité de régulation (17) est conçue pour réguler, par la valve régulable (14), l'écoulement (f) du flux de combustible carboné (20) au pré-reformeur (3), pour ainsi réguler la quantité de $H_2$ produite par unité de temps et la puissance électrique P produite par unité de temps.

19. Système (1) selon l'une des revendications 15 et 18, **caractérisé en ce qu'**un chauffage électrique (500) est conçu pour fournir de la chaleur à au moins l'un parmi le pré-reformeur (3), le générateur de vapeur (11) et l'empilement (2) de SOFC.

20. Utilisation d'un système d'approvisionnement combiné d'hydrogène et d'électricité (1) comprenant un empilement (2) de piles à combustible à oxyde solide et un pré-reformeur (3) externe selon l'une des revendications 15 à 19, pour convertir un combustible carboné (20) en hydrogène en utilisant seulement de la puissance électrique (P) comme source de chaleur pour le reformage externe, pour stocker de l'hydrogène, et pour convertir de l'hydrogène stocké en puissance électrique (P).

21. Utilisation du système selon l'une des revendications 15 à 19 dans un réseau électrique pour l'équilibre entre la production et la consommation d'énergie électrique.

Fig. 1

Fig. 2

Fig. 3

Fig. 4

Fig. 5

Fig. 6

Fig. 7

Fig. 8

Fig. 9

Fig. 10

Fig. 11

**REFERENCES CITED IN THE DESCRIPTION**

**Patent documents cited in the description**

- WO 2005041325 A2
- US 8071241 B2